# EUROPÄISCHE PATENTSCHRIFT

(11) **EP 1 507 664 B1**
(45) Veröffentlichungstag und Bekanntmachung des Hinweises auf die Patenterteilung: **18.07.2007**
(21) Anmeldenummer: 03720267.8
(22) Anmeldetag: 11.04.2003
(51) Int. Cl.: B32B 29/02, B44C 5/04

(54) **DIREKT LAMINIERTE PLATTE**
DIRECTLY LAMINATED PLATE
PANNEAU A STRATIFICATION DIRECTE

(30) Priorität: 07.05.2002 DE 10220501
(43) Veröffentlichungstag der Anmeldung: 23.02.2005
(60) Teilanmeldung: 07009652.4
(73) Patentinhaber: Akzenta Paneele + Profile GmbH, 56759 Kaisersesch (DE)
(72) Erfinder: EISERMANN, Ralf, 56812 Cochem (DE)
(74) Vertreter: Lippert, Hans-Joachim
(86) Internationale Anmeldenummer: PCT/DE2003/001207
(87) Internationale Veröffentlichungsnummer: WO 2003/095202

(56) Entgegenhaltungen:
- EP-A- 0 031 316
- WO-A-99/09274
- GB-A- 2 088 280
- US-A- 4 093 766

## Beschreibung

Die Erfindung betrifft eine direkt laminierte Platte die durch Heißverpressung eines Kerns mit saugfähigen harzimprägnierten Schichten hergestellt ist, mit wenigstens einer Plattenfläche die eine Dekorschicht mit einer grafischen Abbildung der Oberfläche eines imitierten Werkstoffs aufweist sowie mit einer auf der Dekorschicht angebrachten harzimprägnierten transparenten Deckschicht.

Bei den imitierten Werkstoffen handelt es sich beispielsweise um Bauwerkstoffe, wie Holz, Keramik, Natur- oder Kunststein. Die künstliche Abbildung eines solchen Werkstoffs kann Details wiedergeben, beispielsweise eine Werkstoffoberfläche in behandeltem Zustand, wie lackiertes Holz oder in verschlissenem Zustand, mit Abnutzungsspuren, etc. Für derlei direkt laminierte Platten wird nachstehend die Abkürzung DPL benutzt, abgeleitet von der englischen Bezeichnung Direct-Pressure-Laminate. Die DPL-Platten werden in einer sogenannten Taktpresse hergestellt. Darin werden die Schichten lose aufeinander gelegt und ausgerichtet, damit die grafische Abbildung und die strukturierte Pressplatte sich genau überdecken, bevor verpresst wird. Hierin liegt die Besonderheit von Platten der vorliegenden Gattung. Es wird versucht, den grafischen Eindruck für den Benutzer erkennbar auf den taktilen Eindruck der Platte abzustimmen. Bei genauer Betrachtung der Platte entspricht die tastbare Struktur der Oberfläche mehr oder minder der grafischen Abbildung. Bei einem Holzdekor ist beispielsweise die Struktur eines Astes etwa an der Stelle tastbar, an der sich in der Schicht darunter auch die grafische Abbildung dieses Astes befindet.

Üblicherweise werden die Platten aus einem tafelförmigen Holzwerkstoff-Kern gefertigt. Es kommen Kerne aus HDF (High density fibre board), MDF (Medium density fibre board) oder Spanplatte zum Einsatz.

Auf einer Fläche des Kerns wird als Dekorschicht ein harzimprägniertes Dekorpapier angeordnet, das die Funktion der grafischen Abbildung der imitierten Werkstoffoberfläche erfüllt. Die Imitation der Struktur der Werkstoffoberfläche eines Originalwerkstoffs wird hingegen mittels einer anderen Schicht hergestellt, nämlich einem als Deckschicht dienenden harzimprägnierten Overlay. Eine Pressplatte mit einem Negativ der gewünschten Oberflächenstruktur dient dazu, während der Heißverpressung die positive Struktur in das Overlay zu prägen.

Durch den Prozess der Heißverpressung in einer DPL-Presse werden lokal begrenzte Bereiche des Overlays mit Einprägungen versehen, die bis nahe an das Dekorpapier heranreichen. Zwischen den tiefen Einprägungen im Overlay verbleiben hervorstehende Bereiche. Unter den tief eingedrückten Bereichen des Overlays kommt es während der Heißverpressung zu einer hohen Flächenpressung, wohingegen die den eingedrückten Bereichen benachbarten Bereiche weniger stark gepresst werden.

Der Kern der Platte, beispielsweise ein HDF-Kern, weist eine sehr harte und feste Oberfläche auf, auf der das Dekorpapier angeordnet ist. Während der Heißverpressung wird das Dekorpapier jeweils dort stark gequetscht und gestaucht, wo tiefe Einprägungen in das darüberliegende Overlay gedrückt werden. Unter diesem Effekt leidet der optische Eindruck, den die grafische Abbildung bietet sowie die Homogenität und Stabilität des Dekorpapiers, weil die Fasern des Zellstoffs zerdrückt werden.

Der Erfindung liegt die Aufgabe zugrunde, eine direkt laminierte Platte zu schaffen, bei der die grafische Abbildung eines imitierten Werkstoffs übereinstimmt mit der reliefartigen Nachbildung von dessen Oberfläche, wobei eine für die Dekorschicht schonende Heißverpressung möglich ist.

Erfindungsgemäß wird die Aufgabe dadurch gelöst, dass die Dekorschicht aus einem vor der Heißverpressung trockenen Papier ohne Harzimprägnierung gebildet ist, dass zwischen der Dekorschicht und dem Kern eine harzhaltige Zwischenlage vorgesehen ist, die vor der Heißverpressung als separate vorgefertigte Klebeschicht mit Imprägnierharz ausgebildet ist, wobei die Klebeschicht eine Matrix aufweist, in der das Imprägnierharz eingebettet ist, und dass die transparente Deckschicht mit einer reliefartigen Nachbildung der Oberflächenstruktur des imitierten Werkstoffs versehen ist.

Die harzhaltige Zwischenlage mit der Matrix ist während der Heißverpressung weich und dient als Puffer, in den das Dekorpapier hineingedrückt wird. Das Dekorpapier wird nicht mehr auf der harten Oberfläche des Kerns gedrückt und zerquetscht. Im fertigen Zustand kann das Dekorpapier wellenförmig vorliegen. Es ist dann an den eingeprägten Stellen des Overlays etwas tiefer in die Zwischenlage zurückgewichen als vor und hinter einer eingeprägten Stelle. Eine Zerquetschung der Papierfasern tritt nicht auf.

Weil die Zwischenlage vor der Heißverpressung als separate vorgefertigte Klebeschicht mit Imprägnierharz ausgebildet ist, hat diese Ausführung fertigungstechnische Vorteile, wenn große Platten hergestellt werden sollen. Die Klebeschicht kann nach dem selben bekannten Verfahren imprägniert werden, wie Overlay- und Dekorpapiere, wohingegen die Beschichtung eines Kerns aus MDF, HDF oder Spanplatte weiteren fertigungstechnischen Aufwand bedeutet.

Damit die Menge des Imprägnierharzes der Klebeschicht für eine Verklebung mit dem Kern ausreicht, weist die Klebeschicht einen Harzüberschuss auf. Der Überschuss ist jeweils an die Saugfähigkeit des Kernmaterials angepasst. Je geringer die Verdichtung des Kernmaterials ist, desto höher muss der Harzüberschuss gewählt sein. Ein relativ großer Harzüberschuss wird somit bei einem Kernmaterial aus Spanplatte benötigt, in dessen weitfaserige Struktur eine große Menge Harz während der Heißverpressung aufgesogen wird.

Dadurch, dass die Klebeschicht eine Matrix aufweist, in der Imprägnierharz eingebettet ist,'kann je nach Art der Matrix diese unterhalb ihres Sättigungsgrades mit Imprägnierharz versehen sein oder einen Überschuss an Imprägnierharz aufweisen, der an der Oberfläche der gesättigten Matrix anhaftet. Günstigerweise ist die Matrix aus Papier gebildet, da Imprägnierharz von Papier gut aufgesogen wird.

Die Dekorschicht besteht vorzugsweise aus einem Zellulosematerial. Insbesondere kann Papier als Dekorschicht dienen, wobei die grafische Abbildung eines imitierten Werkstoffs beispielsweise mit einem Farbdruckverfahren auf das Papier gebracht ist. Ein wesentlicher Aspekt der Erfindung besteht darin, dass vor der Heißverpressung der Schichten auf dem Zellulosematerial der Dekorschicht kein Imprägnierharz aufgebracht ist. Nach dem Stand der Technik wird Dekorpapier mit einem Harzüberschuss imprägniert. Dies bedeutet, dass das saugfähige Zellulosematerial einen Sättigungsgrad von 100 % seiner Aufnahmekapazität erreicht, wobei wenigstens auf einer Seite der Schicht noch eine zusätzliche Menge Imprägnierharz vorgesehen wird. Letztere ist nicht eingebettet, sondern haftet als Materialauftrag an dem Zellulosematerial an. Die starke Durchtränkung mit heißflüssigem Harz führt zu einem Aufquellen des Zellulosematerials. Dies äußert sich in einem Längen- und Breitenwachstum des Papiers. Nach dem Stand der Technik werden zur Herstellung direkt laminierter Platten, bei denen die grafische Abbildung übereinstimmt mit der geprägten Oberflächenstruktur, stets Dekorpapiere verwendet, die imprägniert sind.

Die bekannten Dekorpapiere werden in einer Druckerei mit der grafischen Abbildung des imitierten Werkstoffs versehen. Die Druckerei liefert das Dekorpapier dann zu einem Betrieb, der die Harzimprägnierung des bedruckten Papiers vornimmt. Schließlich gelangt das Papier von dort zum Laminathersteller, der es im DPL-Verfahren zu einer Platte verpresst.

Bei der Herstellung der Abbildung durch den Drucker ist es zwingend erforderlich, das erwartete Wachstum des Zellulosematerials zu berücksichtigen, das durch die heißflüssige Imprägnierung mit Harz entsteht. Ziel ist es dabei, nach der Trocknung des Harzes ein Papier zu erhalten, das im gewachsenen Zustand von der Größe und dem Bild übereinstimmt mit der Press-platte der DPL-Presse, damit es zwischen Grafik und Struktur zu keinen Verschiebungen kommt.

Wegen der unterschiedlichen Zellfaserausrichtung eines Dekorpapiers muss das Papierwachstum in Länge und Breite nicht gleichmäßig sein. Beim Druck der grafischen Abbildung wird beispielsweise von einem Breitenwachstum von 1,6 % und einem Längenwachstum von 0,6 % ausgegangen. Der Druck der grafischen Abbildung wird deswegen so verkleinert, dass das Papier im gewachsenen Zustand das theoretische Nennmaß erreicht, welches mit den Abmessungen der Pressplatte übereinstimmt.

Für das Wachstum des Papiers durch die Imprägnierung sind vielerlei Faktoren verantwortlicht, wie: Qualität der Zellfaser des Papiers, die Art der Verarbeitung in der Papiermaschine, die Luftfeuchtigkeit bei der Herstellung und Lagerung, unterschiedliche sogenannte Farbflotten für den Druck der grafischen Abbildung, die Qualität des Imprägnierharzes, insbesondere dessen Zusammensetzung und Mischungsverhältnis zwischen Wasser und Härter, die Dosierung der Imprägnierharzmenge in der Imprägniermaschine, verwendete Zusatzstoffe, wie Flugasche, etc.

Bei der Verarbeitung der Druckfarbe ist die Tendenz zu bemerken, dass Farbe mit geringer Deckung, wie beispielsweise Farbe zum Druck einer hellen Ahornholzfläche ein Wachstum begünstigt und stärker deckende dunkle Druckfarbe, beispielsweise zum Druck einer dunklen Mahagoniholzfläche, das Wachstum verringert. Letzteres, weil die stärker deckende Farbe die Zellstoffoberfläche in stärkerem Maß verschließt und heißflüssiges Harz deswegen von der bedruckten Papierseite her schlechter in das Zellulosematerial eindringt.

Durch die Vielzahl der Faktoren für das Papierwachstum ist leicht verständlich, dass die vom Drucker vorgenommene Verkleinerung der grafischen Abbildung immer nur eine Annäherung an das Sollmaß sein kann, um die Abmessung des Papiers im gewachsenen Zustand mit der Größe der Pressplatte in Übereinstimmung zu bringen.

Um den Effekt des Papierwachstums zu verringern, kehrt die Erfindung davon ab, die Dekorschicht mit einem Harzüberschuss zu imprägnieren. Stattdessen wird eine Imprägnierharzmenge von 0 % gewählt. Da bezweckt ist, das Papierwachstums zu verringern, wird kein Imprägnierharz vorgesehen. Dadurch bleibt das Zellulosematerial trocken, wodurch das Papier in geringerem Maß wächst, als ein imprägniertes Papier. Über der Dekorschicht ist als Deckschicht ein harzimprägniertes Overlay angeordnet und unterhalb der Dekorschicht eine harzhaltige Zwischenlage. Während der Heißverpressung muss jeweils an den Grenzflächen zwischen den Schichten eine ausreichende Harzmenge vorhanden sein, um diese fest und dauerhaft miteinander zu verkleben.

Besonders wichtig für die vorliegende Erfindung ist die oben erwähnte Maßnahme, die Dekorschicht aus einem vor der Heißverpressung trockenen Papier zu bilden, das keinerlei Harzimprägnierung aufweist. Der Effekt des Feuchtewachstums aufgrund heißflüssigen Harzes ist auf diese Weise ausgeschaltet. Das Papier muss nicht zu einem Imprägnier-Betrieb transportiert werden, sondern kann aus der Druckerei kommend sofort in der DPL-Presse zu einer laminierten Platte verarbeitet werden. Das Problem des Papierwachstums bei der Herstellung der Dekorschicht ist somit ausgeschaltet. Die Druckerei muss kein harzbedingtes Wachstum mehr berücksichtigen. Die grafische Abbildung des imitierten Werkstoffs kann direkt im Größenverhältnis 1:1 produziert werden. Der Zusatzaufwand zur Verkleinerung der grafischen Abbildung bleibt erspart.

Der Vorteil der Verarbeitung von Dekorschichten mit geringem bzw. keinem Feuchtewachstum tritt besonders bei der industriellen Fertigung direkt laminierter Platten hervor. Dies, wegen der großen Abmessungen der Pressen, die zur Laminierung der Schichten im Einsatz sind. Bei einer sehr kleinen Presse, beispielsweise mit einer Länge und einer Breite von einem Meter und einem Papierwachstum von 1,6 % sind Abweichungen vom Sollwert des Wachstums gering und noch tolerierbar. Bei einer größeren Presse verursacht ein Papierwachstum von 1,6 % hingegen einen erheblich stärkeren Fehler vom Sollwert. Dies führt zu einem Ausschuss von großen Teilen einer direkt laminierten Platte. Fehler dieser Art sind um so schädlicher, da in der Regel nur ganze Platten weiterverarbeitet werden können.

Die direkt laminierten Platten werden zur Weiterverarbeitung beispielsweise in eine Vielzahl von Paneelen aufgesägt, die zu Wand-, Boden- oder Deckenbelägen weiterverarbeitet werden.

Außer einer direkten Verpressung der Schichten in einer Taktpresse ist es bekannt, Schichten in einem kontinuierlichen Pressverfahren zu verbinden. Dabei sind die an einem Kern anzubringenden Schichten aufgewickelt und werden von Rollen zugeführt.

Die erfindungsgemäße Lösung zur Vermeidung von Papierwachstum ermöglicht es, mit einem kontinuierlichen Pressverfahren Platten herzustellen, die eine strukturierte Oberfläche aufweisen, wobei die Struktur exakt übereinstimmt mit der grafischen Abbildung einer darunter liegenden Dekorschicht. Die Struktur muss dabei im Rotationsverfahren von einer Walze eingeprägt werden. Bereits ein minimales Papierwachstum wäre bei diesem hinderlich, weil sich ein Fehler bei der Überdeckung von grafischer Abbildung und Oberflächenstruktur fortsetzt und durch das endlose Abwickeln von der Rolle verstärkt.

Nachfolgend ist die Erfindung in einer Zeichnung beispielhaft veranschaulicht und anhand einer Figur detailliert beschrieben. Es zeigt:
- Fig. 1:: einen Ausschnitt einer direkt laminierten Platte im Querschnitt,
- Fig. 2:: einen Ausschnitt einer erfindungsgemäßen direkt laminierten Platte im Querschnitt.

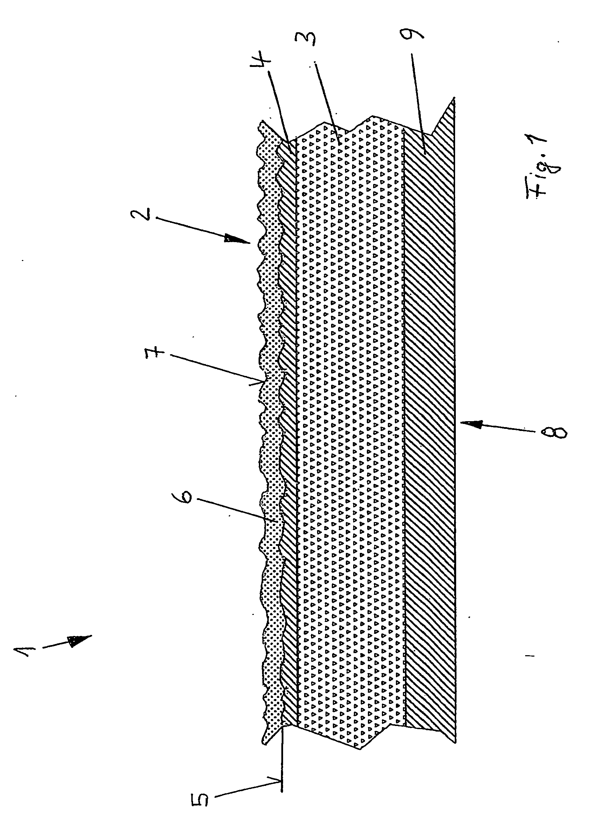

Bei der in Figur 1 dargestellten Platte 1, handelt es sich um eine Platte 1 nach dem Stand der Technik. Auf einer Oberseite 2 eines Kerns 3 aus HDF-Material (high density fibre board) ist eine Dekorschicht 4 angebracht. Diese weist eine grafische Abbildung 5 eines imitierten Werkstoffs auf. Auf der Dekorschicht 4 wiederum ist eine Deckschicht 6 aus einem harzimprägnierten Overlay vorgesehen. In das Overlay ist eine Oberflächenstruktur 7 eingeprägt, die der Oberfläche des imitierten Werkstoffs nachempfunden ist. Es wird angestrebt, eine genaue Überdeckung zwischen der grafischen Abbildung 5 der Dekorschicht 4 und der eingeprägten Oberflächenstruktur 7 der Deckschicht 6, zu erreichen. Dadurch soll der optische Eindruck der grafischen Abbildung 5 korrespondieren mit dem taktilen Eindruck der geprägten Oberflächenstruktur 7.

Die Dekorschicht 4 ist nach dem Stand der Technik aus einem bedruckten Papier hergestellt, das vor der Heißverpressung ebenfalls harzimprägniert worden ist. Das Dekorpapier liegt direkt auf dem Kern 3 der Platte. Auf einer Unterseite 8 der Platte, die der Dekorschicht 4 abgewandt ist, weist der Kern 3 einen sogenannten Gegenzug 9 auf, auch Balancepapier genannt. Dieser Gegenzug 9 besteht ebenfalls üblicherweise aus harzimprägniertem Papier. Die Dicke des Gegenzugpapiers entspricht etwa der Summe der Dicken der Dekorschicht 4 und der Deckschicht 6 zusammen. Ohne den Gegenzug 9 würde die laminierte Platte beim Erkalten durch unterschiedliche Spannungen in Kern 3 und Schichtaufbau (4, 5) verziehen.

Gemäß dem in Figur 1 gezeigten Stand der Technik bewirkt die Prägung der Deckschicht 6 eine nahezu korrespondierende Stauchung des Dekorpapiers 4, nämlich auf dessen bedruckter Seite.

Die Zellfasern des Dekorpapiers 4 werden zerquetscht und beschädigt. Die Qualität der grafischen Abbildung 5 der ehemals ebenen Druckoberfläche des Dekorpapiers nimmt durch die Verformung Schaden.

Nach dem Stand der Technik besteht weiterhin die Schwierigkeit, die grafische Abbildung 5 eines imitierten Werkstoffs mit der eingeprägten Oberflächenstruktur 7 in Überdeckung zu bringen. Dabei handelt es sich nicht um ein Ausrichtungsproblem, sondern um ein Dimensionsproblem, weil das Wachstum von imprägniertem Dekorpapier von einem zum anderen Papierblatt unterschiedlich ausfällt.

Wenn in einer direkt laminierten Platte zwischen der Dekorschicht 4 und dem Kern 3 keine weitere harzhaltige Lage vorgesehen ist, muss das Dekorpapier seinerseits harzimprägniert sein. Die Harzimprägnierung des Dekorpapiers ist notwendig, weil zur Heißverpressung eine bestimmte Menge des Harzes als Klebemittel zwischen dem Dekorpapier und dem Kern3 dient, um eine feste und dauerhafte Verbindung der Schichten zu gewährleisten.

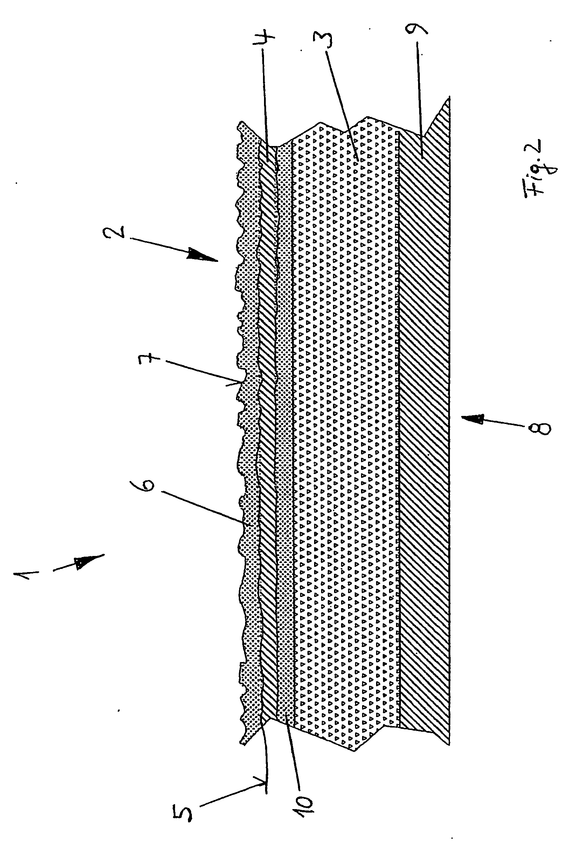

Figur 2 zeigt eine erfindungsgemäße direkt laminierte Platte, mit einer Dekorschicht 4 aus einem bedruckten Dekorpapier. Die grafische Abbildung 5 des Dekorpapiers ist in Übereinstimmung mit einer Oberflächenstruktur 7, die in einer über der Dekorschicht 4 liegenden Deckschicht 6 eingeprägt ist. Bei der grafischen Wiedergabe der Abbildung 5, sowie bei der Rauhigkeit der Oberflächenstruktur 7 handelt es sich um ein Imitat einer Werkstoffoberfläche, wie einem Holz, einer Keramik, einem Kunst- oder Naturstein, etc.

Um eine schonende Heißverpressung der Dekorschicht 4 zu gewährleisten, ist zwischen dem Dekorpapier 4 und einem Kern 3 der laminierten Platte eine harzhaltige Zwischenlage 10 angeordnet. Im vorliegenden Ausführungsbeispiel ist die Zwischenlage 10 vor der Heißverpressung eine separate vorgefertigte Klebeschicht 10, die mit Harz imprägniert ist.

Die Klebeschicht 10 weist eine Matrix auf, in der Imprägnierharz eingebettet ist. Die Matrix besteht ebenfalls aus Papier. Der Harzgehalt in dem Papier entspricht dem Sättigungsgrad des Papiers zuzüglich einem Harzüberschuss, der an den Oberflächen des Papiers anhaftet. Die so beschaffene Klebeschicht 10 bildet ein Reservoir, mit einer ausreichenden Harzmenge zur Verklebung des Papiers mit dem Kern 3. Das HDF-Material des Kerns 3 saugt einen Anteil des Harzüberschusses auf. Das gleiche gilt für die andere Seite der Klebeschicht 10, die mit dem Dekorpapier 4 verbunden ist, auch diese bildet ein Reservoir, nämlich zwecks Verklebung des Klebeschichtpapiers mit dem Dekorpapier 4.

Bei dem Dekorpapier 4 gemäß Fig. 2 handelt es sich um ein trockenes Papier ohne Harzimprägnierung, das ein großes Aufsaugvermögen für das Harz der Klebeschicht 10 aufweist. Der Harzüberschuss der Klebeschicht 10 ist auf die Saugfähigkeiten des Kerns 3 und des trockenen Dekorpapiers 4 abgestimmt und sichert eine feste und dauerhafte Verklebung der Schichten 3, 4, 6 und 10.

Gemäß Figur 2 ist erkennbar, dass die in die Oberfläche der Deckschicht 6 eingeprägte Struktur 7 zu wesentlich geringeren Verformungen auf der bedruckten Seite des Dekorpapiers 4 führt, als beim Stand der Technik gemäß Fig. 1, weil die unter dem Dekorpapier 4 angeordnete Klebeschicht 10 weich und nachgiebig ist. An tief eingeprägten Stellen der Deckschicht 6 kann das Dekorpapier 4 in die Klebeschicht 10 eintauchen, ohne gegen eine harte Oberfläche des Kerns 3 gequetscht zu werden. Auf diese Weise erfolgt eine schonende' Verarbeitung des Dekorpapiers 4 bei der Heißverpressung. Die Stabilität des Dekorpapiers 4, sowie die Qualität der grafischen Abbildung 5 bleiben erhalten.

Durch die erfindungsgemäße Verwendung eines nicht imprägnierten Dekorpapiers 4 entfällt die Schwierigkeit, das Dekorpapier 4 mit einem Farbdruck zu versehen, der verkleinerte Abmessungen aufweist, welche erst im gewachsenen Zustand ungefähr die Abmessungen der zugeordneten Pressplatte erreicht.

Zur Herstellung der erfindungsgemäßen direkt laminierten Platte wird ein Dekorpapier 4 verwendet, dessen Abmessungen ohne Verkleinerung des Drucks eine 1:1 Wiedergabe der Oberfläche eines imitierten Werkstoffs sind. Dies stimmt exakt mit den Abmessungen der korrespondierenden Pressplatte einer DPL-Presse überein. Sämtliche Einflussfaktoren für das Wachstum imprägnierten Papiers, die vorstehend in der Erfindungsbeschreibung genannt sind, fallen auf diese Weise weg. Die Erfindung vereinfacht somit die Herstellung solcher direkt laminierter Platten, die eine grafische Abbildung 5 mit einer Oberflächenstruktur 7 in Übereinstimmung bringen.

Auch die Platte gemäß Figur 2 weist an ihrer, der Dekorschicht gegenüberliegenden Unterseite 8 des Kerns 3, einen Gegenzug 9 aus harzimprägniertem Papier auf, dessen Dicke etwa der Gesamtdicke der Schichten 4, 6 und 10 entspricht, die auf der Oberseite des Kerns 3 angeordnet sind, um auf diese Weise zu beiden Seiten des Kerns 3 ein Gleichgewicht zwischen den Spannungen zu erreichen, die beim Erkalten einer frischgepressten Platte auftreten.

### Bezugszeichenliste

- 1: Platte
- 2: Oberseite
- 3: Kern
- 4: Dekorschicht/Dekorpapier
- 5: Grafische Abbildung
- 6: Deckschicht
- 7: Oberflächenstruktur
- 8: Unterseite
- 9: Gegenzug
- 10: Zwischenlage/Klebeschicht

## Patentansprüche

1. Direkt laminierte Platte (1) die durch Heißverpressung eines Kerns (3) mit saugfähigen harzimprägnierten Schichten (4, 6) hergestellt ist, mit wenigstens einer Plattenfläche die eine Dekorschicht (4) mit einer grafischen Abbildung (5) der Oberfläche eines imitierten Werkstoffs aufweist sowie mit einer auf der Dekorschicht (4) angebrachten harzimprägnierten transparenten Deckschicht (6), **dadurch gekennzeichnet, dass** die Dekorschicht (4) aus einem vor der Heißverpressung trockenen Papier ohne Harzimprägnierung gebildet ist, dass zwischen der Dekorschicht (4) und dem Kern (3) eine harzhaltige Zwischenlage (10) vorgesehen ist, die vor der Heißverpressung als separate vorgefertigte Klebeschicht (10a) mit Imprägnierharz ausgebildet ist, wobei die Klebeschicht (10a) eine Matrix aufweist, in der das Imprägnierharz eingebettet ist, und dass die transparente Deckschicht (6) mit einer reliefartigen Nachbildung der Oberflächenstruktur (7) des imitierten Werkstoffs versehen ist.

2. Direkt laminierte Platte nach Anspruch 1, **dadurch gekennzeichnet, dass** die Imprägnierung der Klebeschicht (10a) einen Harzüberschuss aufweist.

3. Direkt laminierte Platte nach Anspruch 1 oder 2, **dadurch gekennzeichnet, dass** die Matrix aus Papier gebildet ist.

## Claims

1. Directly laminated plate or board (1) that is produced by hot-pressing a core (3) with absorbent, resin-impregnated layers (4, 6), wherein at least one board surface has a decorative layer (4) with a graphic representation (5) of the surface of an imitated material, in addition to a resin-impregnated, transparent cover layer (6) on said decorative layer (4), **characterised in that** the decorative layer (4) comprises paper which is not impregnated with resin and which is dry prior to hot-pressing, **in that** a resinous intermediate ply (10) provided between the decorative layer (4) and the core (3) is produced prior to hot-pressing as a separate, prefabricated adhesive layer (10a) with impregnating resin, where the adhesive layer (10a) displays a matrix in which the impregnating resin is embedded, and **in that** the transparent cover layer (6) is provided with a relief-like reproduction of the surface structure (7) of the imitated material.

2. Directly laminated plate or board according to Claim 1, **characterised in that** the impregnation of the adhesive layer (10a) contains excess resin.

3. Directly laminated plate or board according to Claim 1 or 2, **characterised in that** the matrix is made of paper.

## Revendications

1. Panneau à stratification directe (1), obtenu par pression à chaud d'une âme (3) recouverte de couches absorbantes (4, 6), imprégnées de résine, avec au moins une surface présentant une couche décorative (4) pourvue d'une impression graphique (5) de la surface d'un matériau imité, ainsi qu'une couche de protection (6) transparente, imprégnée de résine et appliquée sur la couche décorative (4), **caractérisé en ce que** la couche décorative (4) est en papier séché avant la pression à chaud et sans imprégnation de résine, **en ce qu'**il est prévu entre la couche décorative (4) et l'âme (3) une couche intermédiaire (10) résineuse, réalisée avant la pression à chaud, en tant que couche adhésive (10a) séparée, préfabriquée et pourvue d'une résine d'imprégnation, la couche adhésive (10a) présentant une matrice noyée dans la résine d'imprégnation et **en ce que** la couche de protection (6) transparente est munie d'une reproduction en relief de la structure superficielle (7) du matériau imité.

2. Panneau à stratification directe selon la revendication 1, **caractérisé en ce que** l'imprégnation de la couche adhésive (10a) présente un excédent de résine.

3. Panneau à stratification directe selon la revendication 1 ou 2, **caractérisé en ce que** la matrice est en papier.
